# EUROPÄISCHE PATENTSCHRIFT

(11) **EP 3 177 844 B1**
(45) Veröffentlichungstag und Bekanntmachung des Hinweises auf die Patenterteilung: **09.06.2021**
(21) Anmeldenummer: 15747978.3
(22) Anmeldetag: 24.07.2015
(51) Int. Cl.: F16D 25/12, F16D 25/08

(54) **GEBERZYLINDER MIT FÜHRUNGSHÜLSE FÜR DICHTLIPPE DES SCHNÜFFELSYSTEMS**
MASTER CYLINDER WITH GUIDE SLEEVE FOR A SEALING LIP OF THE SNIFFER SYSTEM
MAÎTRE-CYLINDRE COMPRENANT UNE DOUILLE DE GUIDAGE POUR UNE LÈVRE D'ÉTANCHÉITÉ DU SYSTÈME DE DILATATION

(30) Priorität: 06.08.2014 DE 102014215518
(43) Veröffentlichungstag der Anmeldung: 14.06.2017
(73) Patentinhaber: Schaeffler Technologies AG & Co. KG, 91074 Herzogenaurach (DE)
(72) Erfinder: MALITOURNE, Jerome, F-67410 Drusenheim (FR); MÁN, Lászlo, 77833 Ottersweier-Unzhurst (DE)
(86) Internationale Anmeldenummer: PCT/DE2015/200420
(87) Internationale Veröffentlichungsnummer: WO 2016/019960

(56) Entgegenhaltungen:
- EP-A2- 1 790 860
- DE-U1- 29 516 488
- US-A1- 2005 279 173

## Beschreibung

Die Erfindung betrifft einen (vorzugsweise hydraulischen) Geberzylinder für eine Betätigungseinrichtung einer Kupplung oder einer Bremse eines Kraftfahrzeuges, wie einem Pkw, Lkw, Bus oder landwirtschaftlichen Nutzfahrzeug, mit einem einen Druckzylinderabschnitt aufweisenden Zylindergehäuse, sowie einem, relativ zu dem Zylindergehäuse verschiebbar gelagerten Kolben, wobei der Kolben in einem Betätigungszustand innerhalb des Druckzylinderabschnittes angeordnet ist, um einen Fluiddruck in einem, seitens des Kolbens, fluidisch mittels einer Dichtungseinrichtung abgedichteten Druckraum zu steuern, und in einem drucklosen Zustand so angeordnet ist, dass der Druckzylinderabschnitt fluidisch mit einem Rückhaltessystem verbunden ist.

Gattungsgemäße Geberzylinder sowie Betätigungseinrichtungen sind bereits in verschiedenen Ausführungen aus dem Stand der Technik bekannt, wobei bspw. die DE 10 2013 204 561 A1 eine Dichtungsanordnung insbesondere einer KolbenZylindereinheit offenbart. Die Dichtungsanordung weist eine ringförmige Dichtung mit einer statischen Dichtlippe und einer Bewegungsdichtlippe auf, die miteinander verbunden sind, wobei die Dichtung in einer Aufnahme aufgenommen ist, die zumindest eine Umfangswandung und zumindest eine Axialwandung aufweist. Die Dichtung stützt sich mit der statischen Dichtlippe radial an der Umfangswandung ab, wobei die Bewegungsdichtlippe an einer an die Aufnahme angrenzenden weiteren Wandung unter gleitbarer Abstützung anliegt. Die weitere Wandung weist in einem axialen Bereich eine in Umfangsrichtung verteilt vorgesehene Anzahl von Axialnuten auf und die Bewegungsdichtlippe weist in einem axialen Bereich ihrer Erstreckung eine in Umfangsrichtung verteilt vorgesehene Anzahl von Axialnuten auf. Die Axialnuten der Bewegungsdichtlippe sind über eine Umfangsnut miteinander verbunden.

Aus der DE 295 16 488 U1 ist ferner ein Geberzylinder bekannt, welcher im Druckraum des Druckzylinders eine Führungshülse aufnimmt. Diese Führungshülse weist im Bereich der Neutralposition des Kolbens entsprechend eine Schnüffelnut auf, so dass Hydraulikflüssigkeit im Bedarfsfall in den Druckraum nachströmen kann.

Bei diesen aus dem Stand der Technik bekannten Ausführungen hat es sich jedoch gezeigt, dass es bei längerer Anlage der entsprechenden Dichtlippe / Dichtung in dem Nutbereich, bspw. in einer Parkposition, in der die Dichtung in einem ausgeschalteten Zustand des Geberzylinders befindlich ist, nachteilhafterweise aufgrund der Umgebungsumstände zu einer bleibenden Verformung der Dichtlippe kommen kann. Denn, wenn die Dichtlippe, bspw. in der Parkposition, bei relativ niedrigen Umgebungstemperaturen über längere Zeit an einem unebenen Bereich anliegt, kann es an der Dichtung zu einer Verformung der Dichtkontur kommen. Bei einem erneuten Betätigen des Geberzylinders können die kalten Dichtlippen dann, zumindest innerhalb eines ersten Zeitbereiches, noch teilweise verformt bleiben, wodurch der Geberzylinder eine zu hohe Leckage aufweisen kann. Eine verlässliche Funktion des Geberzylinders ist dann unter diesen Umständen nicht mehr gegeben.

Weiterhin ist es in den aus dem Stand der Technik bekannten Ausführungen von Nachteil, dass die Dichtungen / Dichtungseinrichtungen relativ aufwändig zu montieren sind. Hierbei können insbesondere beim Einschieben des Kolbens in das Zylindergehäuse die Dichtungen übermäßig mechanisch beansprucht werden, was gar zu einem Materialabtrag an den Dichtungen führen kann. Ein Defekt der entsprechenden Dichtung wäre die Folge.

Es ist die Aufgabe der vorliegenden Erfindung, diese aus dem Stand der Technik bekannten Nachteile zu beheben und einen Geberzylinder zur Verfügung zu stellen, bei dem der leckagefreie Betrieb auch nach längerer Standzeit des Kraftfahrzeuges gewährleistet sein soll, wobei zugleich eine unkomplizierte und verlässliche Montage der Dichtungseinrichtung erzielt werden soll.

Diese Aufgabe wird bei einem gattungsgemäßen Geberzylinder erfindungsgemäß dadurch gelöst, dass eine Dichtung der Dichtungseinrichtung derart ausgestaltet und an dem Kolben angebracht ist, dass sie in zumindest einer Parkposition, im drucklosen Zustand, an einem Dichtungsschonbereich in Form einer nutfreien Zylinderinnenfläche eines Anschlagselementes anliegt.

Dadurch ist es möglich, die für die Dichtung des Druckzylinderabschnittes zuständige Dichtung unmittelbar am Kolben festzulegen und diesen bereits vor dem Einschieben in das Zylindergehäuse mit dem entsprechenden Anschlagselement zu verbinden. Das Anschlagselement muss lediglich im Anschluss noch, unter schützender Anlage der Dichtung an den Dichtungsschonbereich, an dem Zylindergehäuse befestigt werden. Dies ermöglicht eine besonders schonende Montage der Dichtung, wobei zugleich in der entsprechenden Parkposition die Dichtung in dem Schonungsbereich anliegen und ein ungewolltes Verformen der Dichtung vermieden werden kann.

Weitere vorteilhafte Ausführungsformen sind in den Unteransprüchen beansprucht und nachfolgend näher erläutert.

Nach einer weiteren Ausführung ist es vorteilhaft, wenn der Kolben in dem drucklosen Zustand außerhalb des Druckzylinderabschnittes angeordnet ist. Der Druckzylinderabschnitt ist dabei vorzugsweise jener Bereich des Zylindergehäuses, der einen gleichbleibenden, sich zylindrisch erstreckenden Querschnitt aufweist. Der Druckzylinderabschnitt ist vorzugsweise kreisrund ausgebildet. Dadurch ist eine besonders effiziente Schaltbarkeit des Geberzylinders umgesetzt.

Ist das Anschlagselement weiterhin als ein von dem Zylindergehäuse separates (stofflich getrenntes) Bauteil ausgebildet, kann das Anschlagselement besonders kostengünstig hergestellt werden.

In diesem Zusammenhang ist es weiterhin von Vorteil, wenn das Anschlagselement als ein kalt umgeformtes, etwa tiefgezogenes Bauteil ausgestaltet ist. Das Anschlagselement ist weiter bevorzugt topfförmig / hülsenförmig ausgeformt. Dadurch ist eine noch kostengünstigere Herstellung möglich.

Wenn das Anschlagselement an einer Innenumfangsfläche den Dichtungsschonbereich ausbildet, wobei die Innenumfangsfläche im Bereich des Dichtungsschonbereiches einen entlang des Umfangs gleichbleibenden, ersten Durchmesser aufweist, ist der Dichtungsschonbereich besonders einfach ausgestaltbar. Die Herstellung des Geberzylinders wird dadurch weiter begünstigt.

Ist der erste Durchmesser des Dichtungsschonbereiches größer als ein zweiter Durchmesser des Druckzylinderabschnittes ausgebildet, kann sich die Dichtung der Dichtungseinrichtung in der Parkposition innerhalb des Anschlagselementes entspannen und somit sich in radialer Richtung etwas ausbreiten, so dass dadurch die Leckage-Neigung weiter minimiert wird.

Umfasst das Zylindergehäuse vorteilhafterweise einen, sich in axialer Richtung seitens des Anschlagselementes konisch von dem Druckzylinderabschnitt weg erweiternden, mehrere mit dem Rückhaltesystem verbundene Radialnuten aufweisenden Übergangsbereich, so ist hierdurch auch ein Schnüffelbetrieb mittels des Geberzylinders einfach ausführbar, bei dem der Kolben nicht vollständig in die Parkposition zurückgefahren werden muss, um Druckspitzen auszugleichen. Dadurch ist der Geberzylinder besonders leistungsfähig.

Von Vorteil ist es weiterhin, wenn die Dichtung ringförmig ausgebildet ist, wobei eine Dichtungslippe der Dichtung so ausgestaltet ist, dass sie mit dem Dichtungsschonbereich sowie dem Druckzylinderabschnitt in Anlage bringbar ist. Diese Dichtungslippe ist vorzugsweise mit dem Dichtungsschonbereich zumindest in der Parkposition / in dem drucklosen Zustand in Anlage sowie mit dem Druckzylinderabschnitt in dem Betätigungszustand in Anlage. Dadurch ist eine besonders effiziente Dichtung umgesetzt.

Zweckmäßig ist es auch, wenn das Anschlagselement an einer radialen Außenseite einen klammerförmig ausgebildeten Haltebereich aufweist, der im Betriebszustand in einem Aufnahmebereich des Zylindergehäuses radial fest, jedoch axial verschieblich eingeschoben ist. Somit ist die Befestigung des Anschlagselementes besonders einfach möglich und die Montage wird weiter vereinfacht.

Ist das Anschlagselement mittels einer Tellerfeder in Richtung des Druckzylinderabschnittes vorgespannt, ist auch auf einfache Weise das Anfahren eines Referenzpunktes möglich. Vorzugsweise wird dabei die Tellerfeder so angeordnet, dass der Kolben von der Parkposition aus weiter von dem Druckzylinderabschnitt weggezogen werden kann, was zu einem Verschieben des Anschlagselementes in der gleichen Richtung führt. Ein Referenzpunkt wird dann erreicht, wenn die Tellerfeder an einem Referenzanschlag anschlägt und im Wesentlichen in einer vertikalen Ausrichtung befindlich ist. In diesem Referenzpunkt ist das Anschlagselement mittels des Haltebereiches immer noch in radialer Richtung in dem Zylindergehäuse gehalten. Der Verschiebeweg des Kolbens wird weiter bevorzugt direkt über eine den Kolben antreibende Spindel in Abhängigkeit der ausgeführten Umdrehungen berechnet. Dies ermöglicht es, einen Geberzylinder umzusetzen, bei dem auf einen Wegsensor zur Ermittlung der Position des Kolbens verzichtet werden kann. Dadurch ist der Geberzylinder besonders kostengünstig ausgestaltet. Folglich ist der Kolben bei einem Bewegen zwischen der Parkposition und einer Referenzposition / einem Referenzpunkt derart innerhalb des Anschlagselementes befindlich, dass die Dichtung bei dieser Bewegung an dem Dichtungsschonbereich anliegt.

Im Weiteren betrifft die Erfindung auch ein Verfahren zur Montage dieses Geberzylinders nach einem der zuvor genannten Ausführungsformen, umfassend zumindest folgende, zeitlich nacheinander ablaufende Schritte:
a) Einschieben des Kolbens in das Anschlagselement, so dass die Dichtung unter Anlage an dem Dichtungsschonbereich in dem Anschlagselement (in der Parkposition befindlich) eingeschoben / positioniert ist,
b) Einschieben des den Kolben aufnehmenden Anschlagselementes in eine Aufnahme im Zylindergehäuse bis zu einem Anliegen der Anschlagsfläche des Anschlagselementes an einer Gegenanschlagsfläche des Zylindergehäuses, und
c) Befestigen zumindest eines Deckelelementes an dem Zylindergehäuse unter axialer Vorspannung des Anschlagselementes in Richtung des Druckzylinderabschnittes.

Dadurch ist die Montage des Geberzylinders besonders dichtungsschonend ausgeführt.

In anderen Worten ausgedrückt, sieht die vorliegende Erfindung als Lösung für das "Einfrieren" der Dichtung / der Dichtlippe der Dichtung bei niedrigen Temperaturen vor, dass die Dichtlippe in der Referenzposition und in der Parkposition jeweils auf einer nutfreien Zylinderinnenfläche (Dichtungsschonbereich) aufliegt. Diese Zylinderinnenfläche ist durch eine Hülse (Anschlagselement) bereitgestellt, die einen Innendurchmesser (erster Durchmesser) aufweist, der größer ist als der Innendurchmesser (zweiter Durchmesser) des Druckraums des Druckzylinders (Druckzylinderabschnitt). Hierdurch wird auch für eine "eingefrorene" Stellung ein entsprechendes Zusammenpressen zur Abdichtung beim Druckaufbau gewährleistet. Im Bereich der Schnüffelnut (Radialnut) des Gehäuses / Zylindergehäuses des Druckzylinders verlässt die Dichtung den Hülsenbereich (Dichtungsschonbereich) und trifft auf die Gehäuseinnenfläche (Übergangsbereich). Die Gehäuseinnenfläche ist dafür kegelförmig aufgebaut, mit einem (dritten) Durchmesser in Richtung der Hülse / des Anschlagselementes, der größer als der Innendurchmesser der Hülse ist. Wenn die Dichtlippe in dem Bereich des Druckzylinders verlagert wird, trifft sie daher nicht auf eine Kante, sondern auf eine Schräge, die sich langsam auf den Innendurchmesser des Zylinders / Druckzylinderabschnittes zusammenpresst. Hierdurch können Schäden vermieden werden. Die Schnüffelöffnungen und ggf. noch Schnüffelnuten / Radialnuten sind in diesem Kegelbereich (Übergangsbereich) des Zylindergehäuses des Druckzylinders vorgesehen. Der Kegelbereich kann Zentrierelemente aufweisen, mit denen eine Zentrierung der Hülse in Bezug auf den Zylinder wenigstens unterstützt ist. Die Hülse / Führungshülse ist dabei so gestaltet, dass sie im Kegelbereich nicht mehr dem Vortrieb des Kolbens folgen kann, sondern eine Vorspannung aufweist, der gegen einen Anschlag des Zylindergehäuses anschlägt. Desweiteren erfüllt die Hülse noch die Doppelfunktion, dass sie einteilig aufgebaut ist und auch die Kontaktstelle des Kolbens zur Tellerfeder zur Feststellung des Referenzierpunktes darstellt. Der Kolben wird dabei mit erhöhter Kraft in Bezug auf die "normale Kraft" zum Bewegen des Kolbens, ohne, dass die Kupplung zu- oder aufgedrückt wird, gegen den Referenzanschlag gepresst. Der Referenzanschlag ist so dimensioniert, dass sie auch Widerstände im Federbereich überbrücken kann, die bspw. auf Verschmutzungen zurückzuführen sind. Weitere Ausführungen sind die Hülse als zusätzlicher Referenzanschlag auszuführen und die Ausgestaltung zum Gehäuseanschlag sowie die Aufweitung und die Kegelform des Zylinders im Bereich der Schnüffelbohrungen.

Die Erfindung wird nun nachfolgend anhand von Figuren näher erläutert.

Es zeigen:
- Fig. 1: eine Längsschnittdarstellung eines erfindungsgemäßen Geberzylinders nach einer ersten Ausführungsform, wobei insbesondere der Druckzylinderabschnitt, das Rückhaltesystem sowie der mit dem Druckzylinderabschnitt zusammenwirkende Kolben der Geberzylinders dargestellt sind,
- Fig. 2: eine Detailansicht des in Fig. 1 bereits dargestellten Längsschnittes im Bereich des Kolbens sowie des Anschlagselementes, wobei der Kolben in einer Parkposition des drucklosen Zustandes befindlich ist und ein den Druckzylinderabschnitt mittels Radialnuten mit dem Rückhaltesystem verbindende Übergangsbereich zu erkennen ist,
- Fig. 3: eine detaillierte Längsschnittdarstellung des Geberzylinders im Bereich des Kolbens sowie des Anschlagselementes ähnlich zur Fig. 2, wobei in Fig. 3 der Kolben sowie das Anschlagselement in einem Bereich versetzt zu den Radialnuten geschnitten ist,
- Fig. 4: eine isometrische Darstellung des Zylindergehäuses des Geberzylinders im Bereich des Druckzylinderabschnittes, wobei der Übergangsbereich und dessen Radialnuten gut zu erkennen sind,
- Fig. 5: eine isometrische Darstellung des Anschlagselementes, dessen Längsschnittfläche angedeutet ist und das von einer Seite dargestellt ist, die im Betriebszustand von dem Druckzylinderabschnitt abgewandt ist,
- Fig. 6: eine Längsschnittdarstellung eines Zusammenbaus zwischen dem Anschlagselement und dem Kolben, bzw. dem Kolbenkopf des Kolbens, der die Dichtung der Dichtungseinrichtung aufnimmt,
- Fig. 7a: eine Längsschnittdarstellung des Geberzylinders, wobei der die Dichtung aufnehmende Bereich des Kolbens sowie das Anschlagselementes dargestellt sind, und wobei der Kolben samt dem Anschlagselement in eine Referenzierungsposition / Referenzposition verschoben ist,
- Fig. 7b: eine Längsschnittdarstellung des Geberzylinders gemäß Fig. 7a, wobei der Kolben samt dem Anschlagselement in einer Parkposition befindlich ist,
- Fig. 7c: eine Längsschnittdarstellung des Geberzylinders gemäß den Fig. 7a und 7b, wobei der Kolben derart in Richtung des Druckzylinderabschnittes aus dem Anschlagselement heraus verschoben ist, dass die Dichtung mit ihrer äußeren Seite, in einem Schnüffelpunkt, gerade noch nicht vollständig dichtend mit dem Druckzylinderabschnitt in Kontakt befindlich ist, sondern noch eine fluidische Verbindung zwischen dem Druckzylinderabschnitt mit dem Rückhaltesystem vorhanden ist, und
- Fig. 7d: eine Längsschnittdarstellung des Geberzylinders, wie sie bereits in den Fig. 7a bis 7c abgebildet ist, wobei der Kolben im Betätigungszustand befindlich ist, in dem er innerhalb des Druckzylinderabschnittes eingeschoben ist und die Dichtung dichtend an der Innenfläche des Druckzylinderabschnittes anliegt.

Die Figuren sind lediglich schematischer Natur und dienen ausschließlich dem Verständnis der Erfindung. Die gleichen Elemente sind mit denselben Bezugszeichen versehen.

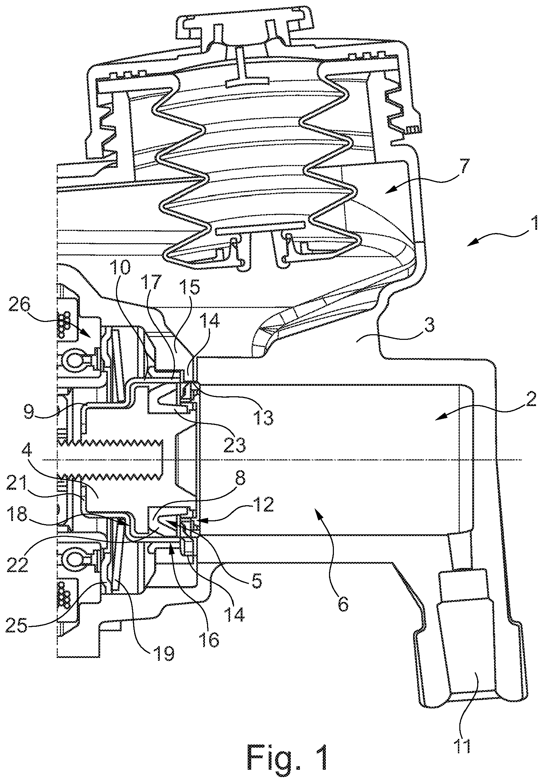

In Fig. 1 ist in übersichtlicher Weise eine erste Ausführungsform des erfindungsgemäßen Geberzylinders 1 abgebildet. Der Geberzylinder 1 ist für den Einsatz in einer hydraulischen der Übersichtlichkeit nicht näher dargestellten Betätigungseinrichtung einer Kupplung in einem Antriebsstrang oder in einer Bremse eines Kraftfahrzeuges vorgesehen. Vorzugsweise ist der Geberzylinder 1 jedoch als ein hydraulischer Geberzylinder ausgestaltet. Der hydraulische Geberzylinder 1 ist dabei vorzugsweise in einem hydraulischen Kupplungsaktuator als Betätigungseinrichtung eingesetzt. Alternativ dazu ist es jedoch auch möglich, den hydraulischen Geberzylinder 1 in einer Betätigungseinrichtung einzusetzen, die als ein modularer Kupplungsaktuator ausgebildet ist. Der Geberzylinder 1 ist nach dem sogenannten "Schnüffelsystem" aufgebaut.

Der Geberzylinder 1 weist einen Druckzylinderabschnitt 2 auf, der in einem Zylindergehäuse 3 des Geberzylinders 1 angeordnet ist. Der Druckzylinderabschnitt 2 ist im Wesentlichen kreisrund bzgl. seines Querschnittes sowie zylindrisch erstreckend ausgebildet. An einem ersten axialen Endbereich weist der Druckzylinderabschnitt 2 einen Anschluss 11 auf, welcher Anschluss 11 mit dem jeweils zu betätigenden Element der Betätigungseinrichtung, etwa einem Kupplungsbetätigungslager (Einrück- oder Ausrücklager) oder einem Bremskolben (im Betriebszustand) hydraulisch verbunden ist. An einem zweiten axialen Endbereich, der dem ersten axialen Endbereich gegenüber liegt, weist der Druckzylinderabschnitt 2 eine Öffnung auf, durch die ein Kolben 4 in den Druckzylinderabschnitt 2 einführbar ist.

Der Kolben 4 (auch als Druckkolben bezeichnet) ist relativ zu dem Zylindergehäuse 3 in axialer Richtung des Druckzylinderabschnittes 2 verschiebbar gelagert. Der Kolben 4 ist koaxial zum dem Druckzylinderabschnitt 2 angeordnet. Der Kolben 4 ist in einem Betätigungszustand des Geberzylinders 1 innerhalb des Druckzylinderabschnittes 2 angeordnet, d.h. in den Druckzylinderabschnitt 2 eingeschoben. Der Kolben 4 weist eine Dichtungseinrichtung 5 auf, die in jenem Betätigungszustand derart mit dem Druckzylinderabschnitt 2 zusammen wirkt, dass der Kolben 4 und der Druckzylinderabschnitt 2 einen abgedichteten Druckraum 6 ausbilden. In Abhängigkeit der axialen Lage / axialen Verschiebelage des Kolbens 4 innerhalb des Druckzylinderabschnittes 2 wird der Druck innerhalb des Druckraums 6 und somit auch im Bereich des Anschlusses 11 gesteuert. In einem drucklosen Zustand des Geberzylinders 1 ist der Kolben 4 derart relativ zum/ außerhalb des Druckzylinderabschnittes 2 platziert, dass der Druckzylinderabschnitt 2 fluidisch mit einem Rückhaltesystem 7 (auch als Rückhaltespeicher oder Reservoir bezeichnet) fluidisch / hydraulisch verbunden ist. Die Dichtungseinrichtung 5 weist eine Dichtung 8 auf, welche Dichtung 8 in axialer Richtung / axial fest an dem Kolben 4 angebracht ist. Der Kolben 4 ist dabei in zumindest einer Parkposition des Geberzylinders 1, im drucklosen Zustand, in ein Anschlagselement 9, unter Anlage der Dichtung 8 an dem Dichtungsschonbereich 10 eingeschoben.

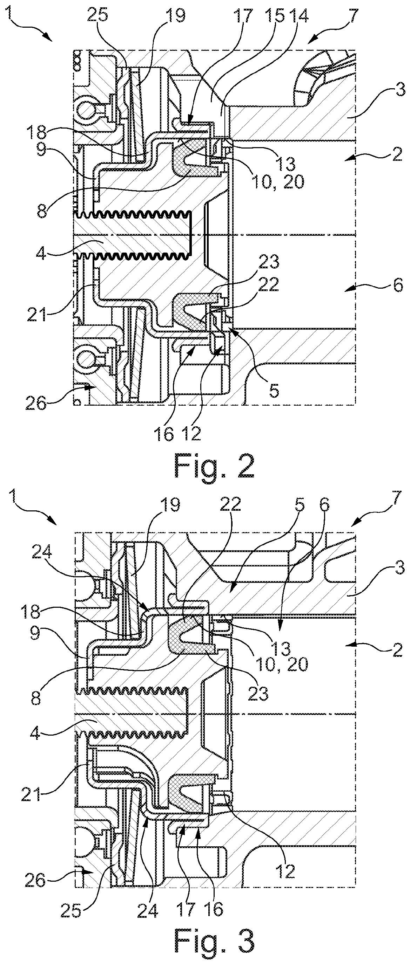

Wie weiterhin besonders gut in Verbindung mit Fig. 2 und 3 zu erkennen ist, geht der, einen kreisrunden Durchmesser (nachfolgend als zweiter Durchmesser bezeichnet) aufweisende Druckzylinderabschnitt 2 an seinem zweiten axialen Endbereich in einen Übergangsbereich 12 über. Der Übergangsbereich 12 ist integral mit dem Druckzylinderabschnitt 2 ausgeführt / verbunden. Der Übergangsbereich 12 schließt somit in axialer Richtung zu einer dem Anschluss 11 abgewandten Seite an den Druckzylinderabschnitt 2 an. Der Übergangsbereich 12 weist eine sich konisch erstreckende Innenumfangsseite 13 auf, die ihren Durchmesser von dem Druckzylinderabschnitt 2 aus in axialer Richtung weg von dem Druckzylinderabschnitt 2 vergrößert. Der Übergangsbereich 12 weist somit auf einem dem Druckzylinderabschnitt 2 abgewandten axialen Ende einen dritten Durchmesser auf, der größer als der zweite Durchmesser ist.

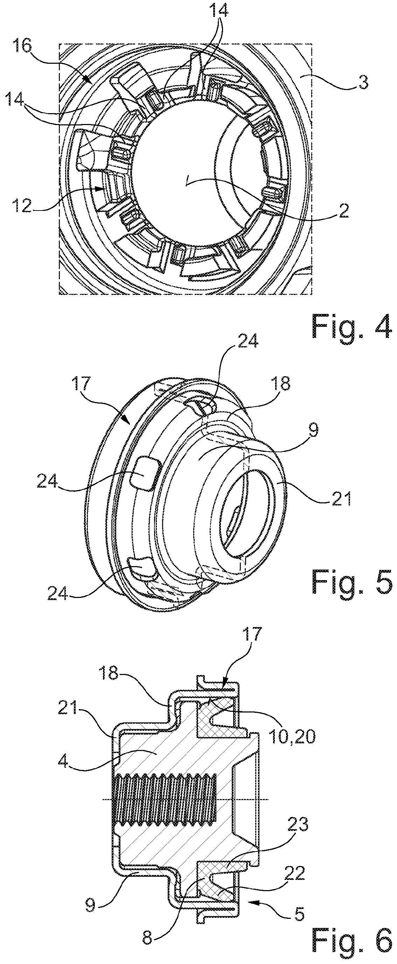

Die Ausgestaltung des Übergangsbereiches 12 ist auch besonders gut in Fig. 4 zu erkennen. Der Übergangsbereich 12 ist im Wesentlichen ringförmig ausgebildet. In einer dem Druckzylinderabschnitt 2 abgewandten Stirnseite sind mehrere Radialnuten 14 in den Übergangsbereich 12 eingebracht. Da der Übergangsbereich 12 integral mit dem Druckzylinderabschnitt 2 ausgeführt ist, sind die Radialnuten 14 somit in dem Zylindergehäuse 3 eingebracht. Die Radialnuten 14 sind zur Innenumfangsseite 13 geöffnet und verbinden den radialen Innenbereich des Übergangsbereiches hydraulisch / fluidisch mit dem Rückhaltesystem 7, das wiederum über zumindest eine Verbindungsnut 15 mit den Radialnuten 14 verbunden ist.

An dem, dem Druckzylinderabschnitt 2 abgewandten, axialen Ende des Übergangsbereiches 12, geht der Übergangsbereich 12 in einen Aufnahmebereich 16 über, der sich ebenfalls im Wesentlichen ringförmig erstreckt und in Form einer Stirnnut ausgebildet ist. Der Aufnahmebereich 16 dient als eine Aufnahme des Anschlagselementes 9. In den Aufnahmebereich 16 ist im Betätigungszustand das Anschlagselement 9 eingeschoben und mit einer axialen Anschlagsfläche unmittelbar an einer Gegenanschlagsfläche des Übergangsbereiches 12 anliegend. In diesem Zusammenhang zeigt die Fig. 2 besonders anschaulich eine Parkposition des Geberzylinders 1, wobei das Anschlagselement 9 mittels seines klammerartigen und ringförmigen Haltebereiches 17, der vorzugsweise durch eine Umbördelung gebildet ist, in dem Aufnahmebereich 16 eingeschoben ist. Die radiale Innenumfangsseite des Aufnahmebereichs 16 und die an dieser anliegende Außenumfangsseite des Haltebereichs 17 sind dabei bzgl. ihres Durchmessers derart aufeinander abgestimmt, dass das Anschlagselement 9 in radialer Richtung zum Zylindergehäuse 3 gehalten ist, sich jedoch noch in axialer Richtung verschieben lässt.

Das im Wesentlichen topfförmig ausgebildete Anschlagselement 9 (auch als Führungshülse bezeichnet) weist weiterhin einen ersten sich in radialer Richtung erstreckenden Absatz 18 auf, an dem von einer dem Druckzylinderabschnitt 2 abgewandten axialen Seite eine Tellerfeder 19 angedrückt ist, so dass das Anschlagselement 9 verliersicher an dem Zylindergehäuse 3 gehalten ist. Der Dichtungsschonbereich 10 ist unmittelbar durch eine Innenumfangsfläche 20 des Anschlagselementes 9 ausgebildet. Die Innenumfangsfläche 20 weist einen kreisrunden, ebenen / flachen Oberflächenbereich auf. Auch weist die Innenumfangsfläche 20 einen Durchmesser, nämlich einen ersten Durchmesser auf, der ebenfalls größer als der zweite Durchmesser, d.h. der Durchmesser des Druckzylinderabschnittes 2 ausgestaltet ist. Der erste Durchmesser ist jedoch wiederum kleiner als der dritte Durchmesser ausgestaltet. Ein zweiter radialer Absatz 21, der radial innerhalb des ersten radialen Absatzes 18 sowie der Innenumfangsfläche 20 angeordnet ist, ist weiterhin dafür vorgesehen, dem Kolben 4 als Anschlag zu dienen. Der zweite Absatz 21 verhindert somit ein Herausziehen des Kolbens 4 in einer axialen Richtung weg von dem Druckzylinderabschnitt 2.

Die weitere Ausgestaltung des Anschlagselementes 9 ist auch besonders gut in den Fig. 5 und 6 zu erkennen. Hier ist auch gut zu erkennen, dass die Dichtung 8 als eine Lippendichtung ausgestaltet ist und eine Dichtlippe 22 aufweist, die sich von einem Grundabschnitt 23, im Längsschnitt betrachtet, in radialer Richtung sowie in axialer Richtung hin zum Druckzylinderabschnitt 2 erstreckt. Der Grundabschnitt 23 liegt flach entlang des Umfangs einer Außenseite eines Kolbenkopfes des Kolbens 4 an. Die Dichtung 8 ist entlang des gesamten Umfangs durchgängig, d.h. ringförmig ausgebildet. Die Dichtlippe 22 liegt in ihrer Parkposition, wie sie in Fig. 2 dargestellt ist, vorzugsweise an dem Dichtungsschonbereich 10 an. Wie weiterhin in Verbindung mit Fig. 3 sowie auch in Verbindung mit Fig. 5 auch gut zu erkennen ist, weist das Anschlagselement in einem radialen Bereich zwischen dem Haltebereich 17 und dem zweiten Absatz 21 mehrere entlang des Umfangs gleichmäßig verteilte Ausgleichsöffnungen in Form von Durchgangsbohrungen auf, über die ein zusätzlicher Überdruck, der ggf. hinter der Dichtlippe 22, d.h. in einer axialen Richtung, die von dem Druckzylinderabschnitt 2 abgewandt ist, entstehen kann, abgebaut wird.

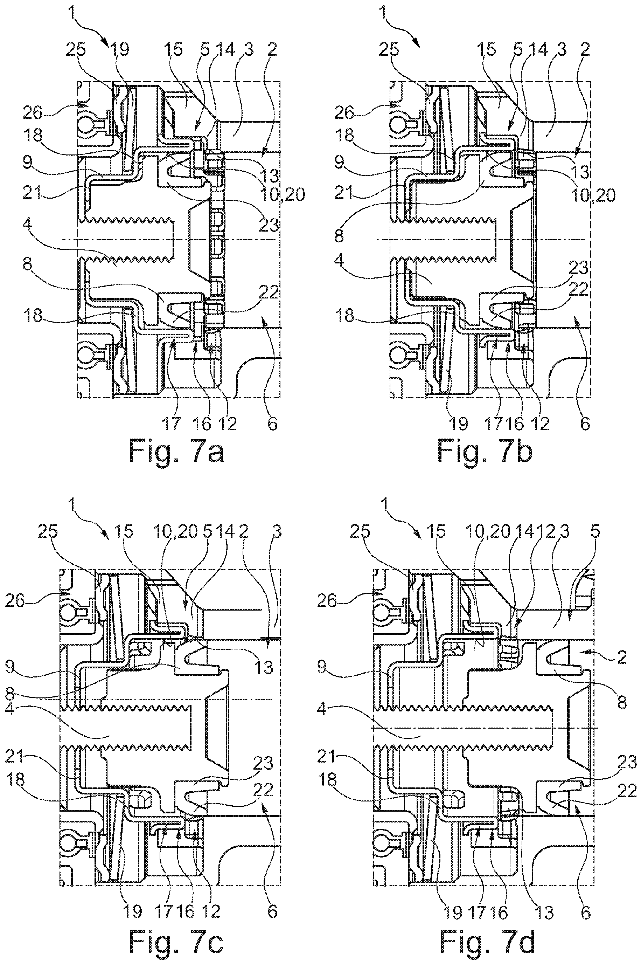

In Verbindung mit den Fig. 7a bis 7d sind dann weiterhin die verschiedenen Schaltzustände des Geberzylinders 1 näher dargestellt. Der Kolben 4 ist Teil eines Spindelantriebes, der aufgrund der Übersichtlichkeit nicht näher dargestellt ist. Folglich bewirkt eine rotatorische Bewegung einer Spindel die axiale Verschiebung des Kolbens 4 in Richtung des Druckzylinderabschnittes 2, in ihn hinein oder aus ihm heraus. In Fig. 7a ist eine Referenzposition / Referenzierungsposition des Geberzylinders 1 dargestellt. In dieser Referenzposition ist der Kolben 4 derart in axialer Richtung von dem Druckzylinderabschnitt 2 zurückgezogen, dass seine Tellerfeder 19 in Anschlag mit einem sekundären Referenzanschlag 25 gelangt. In diesem Referenzierungspunkt, aufgrund der Ausgestaltung des Geberzylinders 1 ohne Wegsensor, wird messtechnisch die Ausgangslage des Kolbes 4 gemessen und überprüft, so dass sicher davon ausgegangen werden kann, dass der Kolben 4 im weiteren Verschiebebereich, im drucklosen Zustand sowie im Betätigungszustand, in der gewünschten Position positioniert ist.

In dieser Referenzposition, aufgrund des Anschlags der Tellerfeder 19 an dem Referenzanschlag 25 und der axialen Verschiebung der Tellerfeder 19, ist das Anschlagselement 9 im Vergleich zur Parkposition nach den Fig. 2 und 7b etwas aus dem Aufnahmebereich 16 herausgezogen, jedoch immer noch in radialer Richtung in dem Aufnahmebereich 16 geführt. Nach dem messtechnischen Erfassen / Feststellen / Überprüfen der Referenzposition / Referenzierungsposition, ist dem Kolben 4 ein Ausgangspunkt zugeordnet, von dem aus der Kolben 4 anschließend wieder in die Parkposition nach Fig. 7b verbracht wird. In der Parkposition schlägt der Haltebereich 17 mit seiner dem Druckzylinderabschnitt 2 zugewandten, axialen Stirnseite (auch als Anschlagsfläche bezeichnet) in axialer Richtung an dem Aufnahmebereich 16 (auch als Gegenanschlagsfläche bezeichnet) anschlägt. In dieser Parkposition ist wiederum die axiale Abstützung des Anschlagselementes 9 und die federelastische Vorspannung in Richtung des Druckzylinderabschnittes 2 mittels der Tellerfeder 19 vorhanden.

Soll schließlich der Druckraum 6 mit einem bestimmten hydraulischen Druck beaufschlagt werden, um eine Kupplung oder eine Bremse zu betätigen, wird der Kolben 4 gemäß Fig. 7c in den Druckzylinderabschnitt 2 eingeschoben. Da der erste Durchmesser kleiner ist als der dritte Durchmesser ist und die Innenumfangsseite 13 des Übergangsbereiches 12 von dem Aufnahmebereich 16 hin zum Druckzylinderabschnitt 2 sich konisch verjüngend verläuft, wird die Dichtlippe 22 mit der axialen Bewegung in den Druckzylinderabschnitt 2 hinein besonders sanft in den Druckzylinderabschnitt 2 eingeführt. Durch dichtende Anlage der Dichtlippe 22 an dem Druckzylinderabschnitt 2 kann daraufhin gemäß Fig. 7d der beliebige Druck in dem Druckraum 6 aufgebaut werden. Kommt es während des Betriebes, etwa durch Temperaturschwankungen zu ungewollten Druckspitzen, wird der Kolben 4 wiederum mittels der Antriebseinheit aus dem Druckzylinderabschnitt 2 so weit hinausgefahren, dass die Dichtlippe 22 auf Höhe des Übergangsbereichs 12 nach der Fig. 7c in einem sog. Schnüffelpunkt zur Anlage kommt. In diesem Schnüffelpunkt ist gewährleistet, dass die Dichtlippe 22 zwar noch im Wesentlichen auf radialer Höhe des zweiten Durchmessers anliegt / komprimiert ist, jedoch ein kurzes Öffnen des Druckraums 6 zum Rückhaltespeicher 7 über die Radialnuten 14 gewährleistet ist. Dadurch kann ein kurzer Druckausgleich stattfinden. Ist schließlich der Betätigungsvorgang vorüber, wird der Kolben 4 wiederum in den drucklosen Zustand verbracht, wobei der drucklose Zustand jener Zustand ist, bei dem der Druckzylinderabschnitt im Wesentlichen den gleichen Druck wie das Rückhaltesystem aufweist. Die Parkposition in diesem drucklosen Zustand (s. Fig. 7b) zeigt den Kolben 4 zurückgeschoben.

Aufgrund der geschickten Ausgestaltung des Anschlagselementes 9 sowie des Kolbens 4 samt der Dichteinrichtung 5, ist auch die Montage des Geberzylinders 1 besonders einfach möglich. Hierzu wird zunächst der Kolben 4, wie man in Fig. 6 gut erkennt, derart eingeschoben, dass die Dichtlippe 22 an dem Dichtungsschonbereich 10 bereits anliegt und auf den ersten Durchmesser zusammengedrückt ist. Anschließend wird dann der Zusammenbau des Anschlagselementes 9 und des Kolbens 4 in das Zylindergehäuse 3 eingeschoben, wobei es zu einem Anliegen des Haltebereichs 17 in dem Aufnahmebereich 16 kommt, welcher Aufnahmebereich 16 somit eine Art Gegenanschlagsfläche ausbildet. Im Anschluss wird dann noch ein Deckelelement 26 an dem Zylindergehäuse 3 befestigt, so dass das Anschlagselement 9 verliersicher und federelastisch mittels der Tellerfeder 19 im Zylindergehäuse 3 positioniert ist.

In anderen Worten ausgedrückt, ist mit dem erfindungsgemäßen Geberzylinder 1 eine primäre Dichtung / Primärdichtung 8 vorhanden, die in der Parkposition auf einer geschlossenen Ringfläche, nämlich der Innenumfangsfläche 20 sitzt. Diese Ringfläche 20 kann gehäusefest / zylindergehäusefest platziert sein oder schwimmend auf einem Anschlagelement 9 zu Referenzierung / Plausibilisierung. Der Anschlagselement 9 ist vorteilhafterweise zu dem hydraulischen Gehäuse / Zylindergehäuse 3 (mittels des Übergangsbereiches 12 im Betätigungszustand) zentriert. Die axiale Vorspannung (wegen der Tellerfeder 19) des Anschlagelementes 9 sichert die Reduzierung / Minimierung eines Spaltes zwischen der geschlossenen Parkfläche / Ringfläche (Innenumfangsfläche 20) und dem Schnüffelnutbereich (entspricht Übergangsbereich 12). Die Montage der primären Dichtung 8 im hydraulischen Gehäuse 3 ist vereinfacht wobei zunächst der Kolben 4 in der Parkposition vormontiert wird / ist.

### Bezugszeichenliste

- 1: Geberzylinder
- 2: Druckzylinderabschnitt
- 3: Zylindergehäuse
- 4: Kolben
- 5: Dichtungseinrichtung
- 6: Druckraum
- 7: Rückhaltespeicher
- 8: Dichtung
- 9: Anschlagselement
- 10: Dichtungsschonbereich
- 11: Anschluss
- 12: Übergangsbereich
- 13: Innenumfangsseite
- 14: Radialnut
- 15: Verbindungsnut
- 16: Aufnahmebereich
- 17: Haltebereich
- 18: erster Absatz
- 19: Tellerfeder
- 20: Innenumfangsfläche
- 21: zweiter Absatz
- 22: Dichtlippe
- 23: Grundabschnitt
- 24: Ausgleichsöffnung
- 25: Referenzanschlag
- 26: Deckelelement

## Patentansprüche

1. Geberzylinder (1) für eine Betätigungseinrichtung einer Kupplung oder einer Bremse eines Kraftfahrzeuges, mit einem einen Druckzylinderabschnitt (2) aufweisenden Zylindergehäuse (3) sowie einem, relativ zu dem Zylindergehäuse (3) verschiebbar gelagerten Kolben (4), wobei der Kolben (4) in einem Betätigungszustand innerhalb des Druckzylinderabschnittes (2) angeordnet ist, um einen Fluiddruck in einem, seitens des Kolbens (4), mittels einer Dichtungseinrichtung (5) fluidisch abgedichteten Druckraum (6) zu steuern, und in einem drucklosen Zustand so angeordnet ist, dass der Druckzylinderabschnitt (2) fluidisch mit einem Rückhaltesystem (7) verbunden ist, **dadurch gekennzeichnet, dass** eine Dichtung (8) der Dichtungseinrichtung (5) derart ausgestaltet und an dem Kolben (4) angebracht ist, dass sie in zumindest einer Parkposition, im drucklosen Zustand, an einem Dichtungsschonbereich (10) in Form einer nutfreien Zylinderinnenfläche eines Anschlagselementes (9) anliegt.

2. Geberzylinder (1) nach Anspruch 1, **dadurch gekennzeichnet, dass** das Anschlagselement (9) als ein von dem Zylindergehäuse (3) separates Bauteil ausgebildet ist.

3. Geberzylinder (1) nach Anspruch 1 oder 2, **dadurch gekennzeichnet, dass** das Anschlagselement (9) als ein kalt umgeformtes Bauteil ausgestaltet ist.

4. Geberzylinder (1) nach einem der Ansprüche 1 bis 3, **dadurch gekennzeichnet, dass** das Anschlagselement (9) an einer Innenumfangsfläche (20) den Dichtungsschonbereich (10) ausbildet, wobei die Innenumfangsfläche (20) im Bereich des Dichtungsschonbereiches (10) einen entlang des Umfangs gleich bleibenden, ersten Durchmesser aufweist.

5. Geberzylinder (1) nach Anspruch 4, **dadurch gekennzeichnet, dass** der erste Durchmesser des Dichtungsschonbereiches (10) größer als ein zweiter Durchmesser des Druckzylinderabschnittes (2) ist.

6. Geberzylinder (1) nach Anspruch 4 oder 5, **dadurch gekennzeichnet, dass** das Zylindergehäuse (3) einen, sich in axialer Richtung seitens des Anschlagselementes (9) konisch von dem Druckzylinderabschnitt (2) weg erweiternden, mehrere mit dem Rückhaltessystem (7) verbundene Radialnuten (14) aufweisenden Übergangsbereich (12) umfasst.

7. Geberzylinder (1) nach einem der Ansprüche 1 bis 5, **dadurch gekennzeichnet, dass** die Dichtung (8) ringförmig ausgebildet ist, wobei eine Dichtungslippe (22) der Dichtung (8) so ausgestaltet ist, dass sie mit dem Dichtungsschonbereich (20) sowie dem Druckzylinderabschnitt (2) in Anlage bringbar ist.

8. Geberzylinder (1) nach einem der Ansprüche 1 bis 6, **dadurch gekennzeichnet, dass** das Anschlagselement (9) an einer radialen Außenseite einen klammerförmig ausgebildeten Haltebereich (17) aufweist, der im Betriebszustand in einen Aufnahmebereich (16) des Zylindergehäuses (3) radial fest, jedoch axial verschieblich eingeschoben ist.

9. Geberzylinder (1) nach einem der Ansprüche 1 bis 7, **dadurch gekennzeichnet, dass** das Anschlagselement (9) mittels einer Tellerfeder (19) in Richtung des Druckzylinderabschnittes (2) vorgespannt ist.

10. Verfahren zur Montage eines Geberzylinders (1) nach einem der Ansprüche 1 bis 9, umfassend folgende, zeitlich nacheinander ablaufende Schritte:
a) Einschieben des Kolbens (4) in das Anschlagselement (9), sodass die Dichtung (8) unter Anlage an dem Dichtungsschonbereich (10) in dem Anschlagselement (9) eingeschoben ist,
b) Einschieben des den Kolben (4) aufnehmenden Anschlagselementes (9) in eine Aufnahme im Zylindergehäuse (3) bis zu einem Anliegen einer Anschlagsfläche des Anschlagselementes (9) an einer Gegenanschlagsfläche des Zylindergehäuses (3), und
c) Befestigen zumindest eines Deckelelementes (26) an dem Zylindergehäuse (3) unter axialer Vorspannung des Anschlagselementes (9) in Richtung des Druckzylinderabschnittes (2).

## Claims

1. A master cylinder (1) for an actuating device of a clutch or a brake of a motor vehicle, having a cylinder housing (3) having a pressure cylinder section (2) and a piston (4) mounted so as to be movable relative to the cylinder housing (3), the piston (4) in an actuated state being arranged within the pressure cylinder section (2) in order to control a fluid pressure in a pressure chamber (6) which is fluidically sealed on the piston side (4) by means of a sealing device (5), and being arranged in a pressure-less state such that the pressure cylinder section (2) is fluidically connected to a restraint system (7), **characterised in that** a seal (8) of the sealing device (5) is configured and attached to the piston (4) such that, in at least one parking position, in the pressure-less state, it rests against a sealing protection area (10) in the form of a groove-free cylinder inner surface of a stop element (9).

2. The master cylinder (1) according to claim 1, **characterised in that** the stop element (9) is formed as a component that is separate from the cylinder housing (3).

3. The master cylinder (1) according to claim 1 or 2, **characterised in that** the stop element (9) is formed as a cold-formed component.

4. The master cylinder (1) according to one of claims 1 to 3, **characterised in that** the stop element (9) forms the sealing protection area (10) on an inner circumferential surface (20), wherein the inner circumferential surface (20) has in the area of the sealing protection area (10) a first diameter remaining the same along the circumference.

5. The master cylinder (1) according to claim 4, **characterised in that** the first diameter of the sealing protection area (10) is greater than a second diameter of the pressure cylinder section (2).

6. The master cylinder (1) according to claim 4 or 5, **characterised in that** the cylinder housing (3) comprises a transition area (12) which widens conically away from the pressure cylinder section (2) in the axial direction on the side of the stop element (9) and has a plurality of radial grooves (14) connected to the restraint system (7).

7. The master cylinder (1) according to one of claims 1 to 5, **characterised in that** the seal (8) is annular, wherein a sealing lip (22) of the seal (8) is configured such that it can be brought into contact with the sealing protection area (20) and the pressure cylinder section (2).

8. The master cylinder (1) according to one of claims 1 to 6, **characterised in that** the stop element (9) has a bracket-shaped retaining area (17) on a radial outer side, which in the operating state is pushed in a radially fixed but axially displaceable manner into a receiving region (16) of the cylinder housing (3).

9. The master cylinder (1) according to one of claims 1 to 7, **characterised in that** the stop element (9) is pre-tensioned in the direction of the pressure cylinder section (2) by means of a plate spring (19).

10. A method for assembling a master cylinder (1) according to one of claims 1 to 9, comprising the following, sequential steps:
a) pushing the piston (4) into the stop element (9) such that the seal (8) is pushed into the stop element (9) while contacting the sealing protection area (10),
b) insertion of the stop element (9) receiving the piston (4) into a receptacle in the cylinder housing (3) until a stop surface of the stop element (9) rests on a counter stop surface of the cylinder housing (3), and
c) attaching at least one cover element (26) to the cylinder housing (3) with axial pretensioning of the stop element (9) in the direction of the pressure cylinder section (2).

## Revendications

1. Maître-cylindre (1) pour un dispositif d'actionnement d'un embrayage ou d'un frein d'un véhicule automobile, comprenant un carter de cylindre (3) comportant une partie cylindre de pression (2), ainsi qu'un piston (4) monté de manière à pouvoir coulisser par rapport au carter de cylindre (3), le piston (4), dans un état d'actionnement, à l'intérieur de la partie cylindre de pression (2), étant conçu pour commander une pression de fluide dans une chambre de pression (6) rendue étanche aux fluides au moyen d'un dispositif d'étanchéité (5) du côté du piston (4) et, dans un état sans pression, étant conçu de telle sorte que la partie cylindre de pression (2) est reliée fluidiquement à un système de retenue (7), **caractérisé en ce qu'**un joint d'étanchéité (8) du dispositif d'étanchéité (5) est conçu et installé sur le piston (4) de telle sorte qu'il repose, dans au moins une position d'immobilisation, dans l'état sans pression, au niveau d'une zone de protection de joint d'étanchéité (10) sous la forme d'une surface interne de cylindre sans rainure d'un élément de butée (9).

2. Maître-cylindre (1) selon la revendication 1, **caractérisé en ce que** l'élément de butée (9) est conçu sous la forme d'un composant séparé du carter de cylindre (3).

3. Maître-cylindre (1) selon la revendication 1 ou 2, **caractérisé en ce que** l'élément de butée (9) est conçu sous la forme d'un composant formé à froid.

4. Maître-cylindre (1) selon l'une quelconque des revendications 1 à 3, **caractérisé en ce que** l'élément de butée (9) forme, sur une surface circonférentielle interne (20), la zone de protection de joint d'étanchéité (10), la surface circonférentielle interne (20) dans la zone de la zone de protection de joint d'étanchéité (10) présentant un premier diamètre restant identique le long de la circonférence.

5. Maître-cylindre (1) selon la revendication 4, **caractérisé en ce que** le premier diamètre de la zone de protection de joint d'étanchéité (10) est supérieur à un second diamètre de la partie cylindre de pression (2).

6. Maître-cylindre (1) selon la revendication 4 ou 5, **caractérisé en ce que** le carter de cylindre (3) comprend une zone de transition (12) s'élargissant de manière conique à l'écart de la partie cylindre de pression (2) dans la direction axiale du côté de l'élément de butée (9) et présentant plusieurs rainures radiales (14) reliées au système de retenue (7).

7. Maître-cylindre (1) selon l'une quelconque des revendications 1 à 5, **caractérisé en ce que** le joint d'étanchéité (8) est conçu de manière annulaire, une lèvre d'étanchéité (22) du joint d'étanchéité (8) étant conçue de manière à venir en contact avec la zone de protection de joint d'étanchéité (20) comme avec la partie cylindre de pression (2).

8. Maître-cylindre (1) selon l'une quelconque des revendications 1 à 6, **caractérisé en ce que** l'élément de butée (9) comporte, sur un côté externe radial, une zone de maintien (17) conçue en forme de pince, laquelle, dans l'état de fonctionnement, est insérée, dans une zone de réception (16) du carter de cylindre (3), radialement fixe mais de manière à pouvoir se déplacer axialement.

9. Maître-cylindre (1) selon l'une quelconque des revendications 1 à 7, **caractérisé en ce que** l'élément de butée (9) est précontraint, au moyen d'une rondelle Belleville (19), en direction de la partie cylindre de pression (2).

10. Procédé de montage d'un maître-cylindre (1) selon l'une quelconque des revendications 1 à 9, comprenant les étapes suivantes, se déroulant l'une après l'autre :
a) l'introduction du piston (4) dans l'élément de butée (9) de telle sorte que le joint d'étanchéité (8) est introduit dans l'élément de butée (9) tout en venant en contact avec la zone de protection de joint d'étanchéité (10),
b) l'introduction de l'élément de butée (9) recevant le piston (4) dans un réceptacle dans le carter de cylindre (3) jusqu'à ce qu'une surface de butée de l'élément de butée (9) vienne en contact avec une surface de contre-butée du carter de cylindre (3), et
c) la fixation d'au moins un élément de couvercle (26) au carter de cylindre (3) à précontrainte axiale de l'élément de butée (9) en direction de la partie cylindre de pression (2).
